# EUROPÄISCHE PATENTSCHRIFT

(11) **EP 1 927 504 B1**
(45) Veröffentlichungstag und Bekanntmachung des Hinweises auf die Patenterteilung: **11.11.2009**
(21) Anmeldenummer: 07015857.1
(22) Anmeldetag: 11.08.2007
(51) Int. Cl.: B60N 2/46

(54) **Mittelarmlehne mit Parallelverstellungsmöglichkeiten**
Central arm rest with parallel adjustment functions
Accoudoir doté de possibilités de réglage parallèle

(30) Priorität: 29.11.2006 DE 102006056651
(43) Veröffentlichungstag der Anmeldung: 04.06.2008
(73) Patentinhaber: BOS GmbH & Co. KG, 73760 Ostfildern (DE)
(72) Erfinder: Salewski, Jürgen, 40599 Düsseldorf (DE)
(74) Vertreter: Rüger, Barthelt & Abel Patentanwälte

(56) Entgegenhaltungen:
- EP-A- 1 829 740
- WO-A-94/23616
- WO-A-99/43237

## Beschreibung

Kraftfahrzeuge sind üblicherweise mit einer Mittelarmlehne in der Rücksitzbank versehen. Die Mittelarmlehne kann aus einer Lage, in der sie in der Flucht der Rücksitzlehne liegt, in eine Stellung umgeklappt werden, in der sie ihre Mittelarmlehnenfunktion erfüllt. Dadurch steht den Fondpassagieren eine Mittelarmlehne zur Verfügung, andererseits kann der mittlere Sitz gegebenenfalls auch mit verwendet werden.

Damit die Sitzfunktion auf dem Mittelplatz erreicht werden kann, darf die Mittelarmlehne im heraufgeklappten Zustand nicht über die Fläche der Rücksitzlehne nach vorne überstehen. Ihre Dicke beschränkt sich somit auf den Platz, der zwischen der nach vorne zeigenden Fläche der Rücksitzlehne und der rückwärtigen tragenden Struktur der Karosserie zur Verfügung steht. Dieser Platz führt zu einer Dicke einer Armlehne, die im heruntergeklappten Zustand zu dünn ist, d.h. die Armauflagefläche liegt zu tief, so dass keine angenehme ergonomische Körperhaltung erreicht werden kann.

Es ist deswegen aus der DE 10 2006 010 376.9 die Mittelarmlehne in der Dicke verstellbar zu machen.

Die Mittelarmlehne besteht aus einem Unterteil und einem Oberteil, die über ein Scharnier, das an der Vorderseite der Mittelarmlehne liegt, miteinander verbunden sind. Durch eine Kulissenmechanik, die zwischen den beiden Teilen eingefügt ist, kann der obere Teil der Mittelarmlehne hoch oder runter geschwenkt werden. Allerdings ist die Dicke der Mittelarmlehne im Bereich ihres vorderen Endes, bezogen auf die Gebrauchsstellung, konstant und entspricht der konstruktiven Dicke der Rücksitzlehne.

Die Folge hiervon ist, dass die Armlehnenauflage in der Gebrauchsstellung der Mittelarmlehne nach vorne abfällt, wenn das Oberteil in die maximal hoch geschwenkte Stellung gebracht ist.

Aus der WO 94/23616 A1 ist eine Art Bürostuhl bekannt, der eine gefederte Armlehne aufweist. Die Armlehne ist über ein Scharnier mit dem Stuhlgestell verbunden. Ein weiteres Scharnier verbindet die Armlehne mit einer Gewindestange, die durch eine ortsfeste Bohrung hindurchführt. Mittels einer Feder und einer Einstellschraube kann die Grundeinstellung justiert werden, von der ausgehend die Armlehne bei Belastung mehr oder weniger stark nach unten federt.

Ausgehend hiervon ist es Aufgabe der Erfindung eine Mittelarmlehne zu schaffen, bei der das Oberteil gegenüber dem Unterteil eine größere Anzahl von Freiheitsgraden hauben kann.

Bei der neuen Armlehne handelt es sich um eine Armlehne für Kraftfahrzeugsitze, insbesondere eine Mittelarmlehne für Rücksitzbänke von Kraftfahrzeugen. Zu der Armlehne gehört ein Oberteil und ein Unterteil, wobei das Oberteil eine Armauflagefläche trägt.

Das Oberteil und das Unterteil sind über zwei Gelenkeinrichtungen miteinander verbunden. Eine der Gelenkeinrichtungen weist wenigstens eine rotatorische Achse auf, die quer zur Längserstreckung der Armlehne ausgerichtet ist.

Die andere Gelenkeinrichtung verfügt über zwei Freiheitsgrade, nämliche eine rotatorische Achse und eine translatorische Achse. Die rotatorische Achse liegt wiederum quer zur Längserstreckung der Armlehne, während die translatorische Achse, bezogen auf die Armlehnengebrauchsstellung, etwa vertikal ausgerichtet ist.

Es ist eine Sperreinrichtung vorgesehen, um wenigstens die zweite Gelenkeinrichtung, die die translatorische Achse aufweist, in der Einstellung zu fixieren.

Wenn beide Gelenkeinrichtungen gleich ausgebildet sind, in dem Sinne, dass beide Gelenkeinrichtungen zwei Freiheitsgerade haben, lässt sich das Oberteil gegenüber dem Unterteil im Rahmen des möglichen Verstellhubs parallel verstellen, oder im Rahmen des möglichen Verstellhubs nach vorne oder nach hinten, bezogen auf die normale Nomenklatur bei Kraftfahrzeugen, kippen.

Die Armlehne kann mit ihrem Unterteil über eine horizontale Lagerachse mit dem Kraftfahrzeug verbunden sein. Diese horizontale Lagerachse liegt quer zur Längsachse des Unterteils, womit die Armlehne aus einer etwa horizontal ausgerichteten Gebrauchsstellung mit Armlehnenfunktion in eine etwa vertikal ausgerichtete Ruhestellung schwenkbar ist. In der Ruhestellung kann sie als Ergänzung der Rücksitzlehne dienen, um einen dritten Sitzplatz zu ermöglichen.

Die Armlehne kann über eine Steuereinrichtung verfügen, die durch die Schwenkbewegung der Armlehne betätigbar ist, damit beim Hochschwenken die Armlehne in eine Stellung gebracht wird, bei der das Oberteil und das Unterteil möglichst dicht beieinander liegen.

Ferner kann die Steuereinrichtung mit einer Memory-Funktion versehen sein, die bewirkt, dass beim Herunterschwenken der Mittelarmlehne das Oberteil gegenüber dem Unterteil in die Stellung zurückgebracht wird, die diese beiden Teile zueinander vor dem Hochschwenken hatten.

Günstige Einbauverhältnisse ergeben sich, wenn das Oberteil schalenartig ist. Dadurch können die einzelnen Getriebeteile, die die Gelenkanordnungen bilden, verdeckt untergebracht werden, um einerseits eine Verletzungsgefahr auszuschließen und andererseits die Gelenkeinrichtungen gegen Beschädigungen zu schützen.

Das Oberteil kann das Unterteil übergreifen, was verhindert, dass Gegenstände von oben in den Spalt zwischen die beiden Teile fallen und somit in das Innere der Armlehne gelangen können.

Die beiden Freiheitsgrade der Gelenkeinrichtung lassen sich einfach verwirklichen, indem an einem Teil, vorzugsweise am Unterteil, ein Zahnrad gelagert wird, während das andere Teil mit einer Zahnstange versehen ist. Die Zahnstange kann durch eine Feder mit dem Zahnrad in Eingriff gehalten werden. Es ist unschwer zu erkennen, dass ein drehbares Zahnrad sowohl eine Verschwenkung der Zahnstange als auch eine Längsverschiebung in der jeweiligen Schwenkstellung ermöglicht.

Die Drehachse des Zahnrads kann quer zu der Längsachse der Armlehne ausgerichtet sein.

Wenn die jeweilige Gelenkeinrichtung zwei Zahnräder aufweist, die über eine starre Achse miteinander gekuppelt sind, lässt sich auf einfache Weise ohne spezielle Führungen das Oberteil gegenüber dem Unterteil kippsicher abstützen, in dem Sinne, dass das Oberteil nicht bezüglich einer zu der Längsachse parallelen Achse schaukeln kann.

Wenn dem betreffenden Zahnrad eine Sperreinrichtung zugeordnet ist, lässt sich die betreffende Höhen- oder Schwenkstellung fixieren, die an der jeweiligen Gelenkeinrichtung eingestellt ist. Die Sperreinrichtung kann eine Sperrklinke umfassen, die in das Zahnrad eingreift, das mit der Zahnstange zusammenwirkt. Die Verriegelungsklinke der Sperreinrichtung kann auf einem Lagerträger sitzen, der koaxial zu dem betreffenden Zahnrad drehbar gelagert ist. Dem Lagerträger kann ein Anschlag zugeordnet sein, sowie eine Halteeinrichtung damit in einer Funktionsstellung der Lagerträger fixiert ist, um in der Folge auch das betreffende Zahnrad in der erforderlichen Drehstellung zu fixieren.

Die Haltefunktion ist lösbar in dem Sinne, dass beim Hochschwenken der Armlehne der Lagerträger zusammen mit dem betreffenden Zahnrad gedreht wird, damit die Armlehne in ihre Stellung mit geringster Dicke gebracht werden kann.

Zum Verdrehen des Zahnrads kann eine Steuerstange vorgesehen sein, mit der die Schwenkstellung der Armlehne erfasst und auf die Gelenkeinrichtung übertragen wird. Die Anordnung kann so gestaltet sein, dass der Betätigungshub der Betätigungseinrichtung davon abhängig ist, in welchem Abstand das Oberteil von dem Unterteil steht.

Zu der Betätigungseinrichtung gehört eine Zahnstange, die mit einem weiteren Zahnrad zusammenwirkt, das gleichachsig zu dem Zahnrad der Gelenkanordnung gelagert ist. Diese beiden Zahnräder können über eine Kulissenanordnung miteinander zusammenwirken. Die Kulissenanordnung kann aus einem Zapfen und einem um die Drehachse der Zahnräder herum liegenden Langloch gebildet sein. Beim Zusammendrücken der Armlehne durch den Benutzer entfernt sich der Lochrand von dem Zapfen, so dass beim Hochschwenken der Zapfen praktisch leer läuft. Wenn andererseits die Armlehne in ihre maximale Stellung gebracht ist, liegt der Lochrand bzw. das Lochende in unmittelbarer Nachbarschaft des Zapfens, damit das Zahnrad der Gelenkanordnung in einen maximalen Drehwinkel gedreht wird, wenn die Armlehnen in die Ruhestellung hochgeschwenkt wird.

Zur Steuerung der Zahnstange kann ein Zahnrad verwendet werden, dass drehfest auf der Lagerachse der Mittelarmlehne sitzt.

Im Übrigen sind Weiterbildungen der Erfindung Gegenstand von Unteransprüchen.

Die nachfolgende Figurenbeschreibung erläutert Aspekte zum Verständnis der Erfindung. Weitere, nicht beschriebene Details kann der Fachmann in der gewohnten Weise den Zeichnungen entnehmen, die insoweit die Figurenbeschreibung ergänzen. Es ist klar dass eine Reihe von Abwandlungen möglich sind.

Die nachfolgenden Zeichnungen sind nicht unbedingt maßstäblich. Zur Veränschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenfalls vorhandene Detail.

In der Zeichnung zeigen:
- Fig. 1: den aufgebrochenen Fondbereich eines Pkws mit Blick gegen die hintere rechte Innenseite in ei- ner vereinfachten perspektivischen Darstellung;
- Fig. 2: den Pkw nach Fig. 1 mit heruntergeklappter Mit- telarmlehne, in der Stellung mit minimaler Dicke;
- Fig. 3: die Mittelarmlehne nach den Fig. 1 und 2 in einem Längsschnitt, mit einer schematisierten Darstel- lung des Mechanismus zum Bewegen des Armlehnen- oberteils gegenüber dem Armlehnenunterteil, in stark schematisierter Form; und
- Fig. 4: Teile einer der beiden Gelenkeinrichtungen, in einer perspektivischen Explosionsdarstellung.

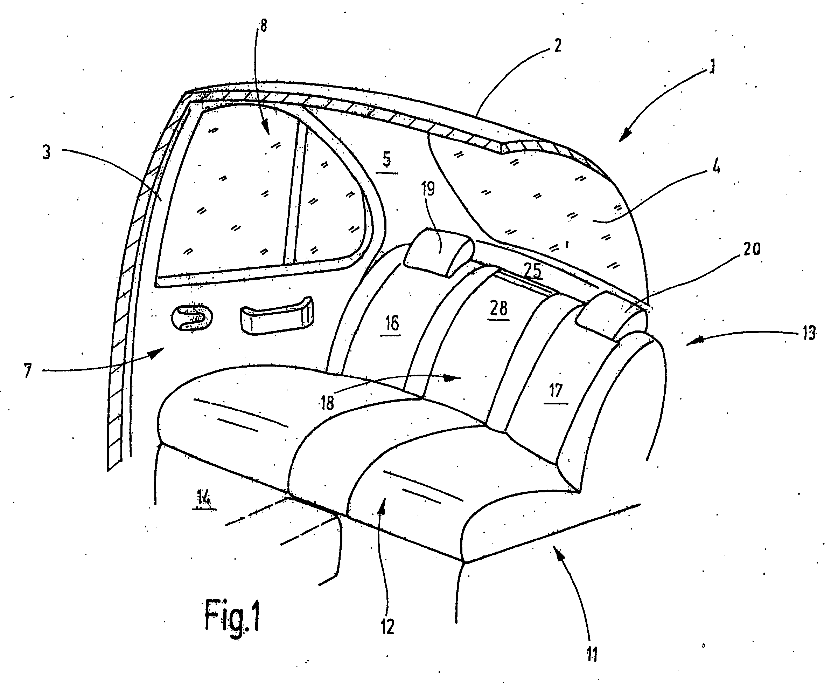

Fig. 1 stellt den aufgebrochenen abgeschnittenen Fondbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen, wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Soweit nichts anderes angegeben ist, beziehen sich Begriffe wie links, rechts, oben und unten auf Richtungen am Kraftfahrzeug selbst, in der üblicherweise verwendeten Weise.

Der veranschaulichter Karosserieabschnitt 1 weist ein Dach 2 auf, von dem seitlich eine B-Säule 3 nach unten zu einer nicht gezeigten Bodengruppe führt. Eine entsprechenden B-Säule wäre auf der weggebrochenen linken Kraftfahrzeugseite zu denken. Das Dach 2 geht an seiner Hinterkante in ein Heckfenster 4 über. Seitlich endet das Heckfenster an einer C-Säule 5, die sich in Abstand zu der B-Säule 3 befindet. Die C-Säule 5 ist spiegelbildlich zu der weggeschnittenen C-Säule und trägt eine nicht weiter zu erkennende Innenverkleidung.

Zwischen der B-Säule 3 und der C-Säule 5 ist an der B-Säule 3 eine hintere Seitentür 7 in bekannter Weise anscharniert. Die Seitentür 7 enthält, wie bei Kraftfahrzeugen üblich, ein Fenster 8.

Auf der Höhe der hinteren Seitentür 7 befindet sich eine Rücksitzbank 11, zu der eine Sitzfläche 12 sowie eine Rücksitzlehne 13 gehören. Die Sitzfläche 12 liegt auf einer Sockelfläche 14 auf, die zu der Bodengruppe gehört und in der Fußräume ausgebildet sind.

Knapp unterhalb der Oberkante der Rücksitzlehne 3 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander ein Stück weit beabstandet sind. In diesem Zwischenraum befindet sich ein Rückenlehnenabschnitt 18, der gleichzeitig in einer anderen Funktionsstellung eine Mittelarmlehne bildet und deswegen im folgenden auch so bezeichnet wird. Die Mittelarmlehne 18 ist in der Nähe ihrer Unterkante anscharniert, wobei die Schwenkachse außerdem in der Nähe jener Fläche liegt, die bei heraufgeklappter Mittelarmlehne 18 nach vorne zeigt. In der hochgeklappten Stellung füllt die Mittelarmlehne 18 vollständig den Raum zwischen den beiden Rückenlehnenabschnitten 16 und 17 aus. Es entsteht so ein dritter Notsitz. An der Oberkante der Rückenlehnenabschnitte 16 und 17 befinden sich Kopfstützen 19 und 20.

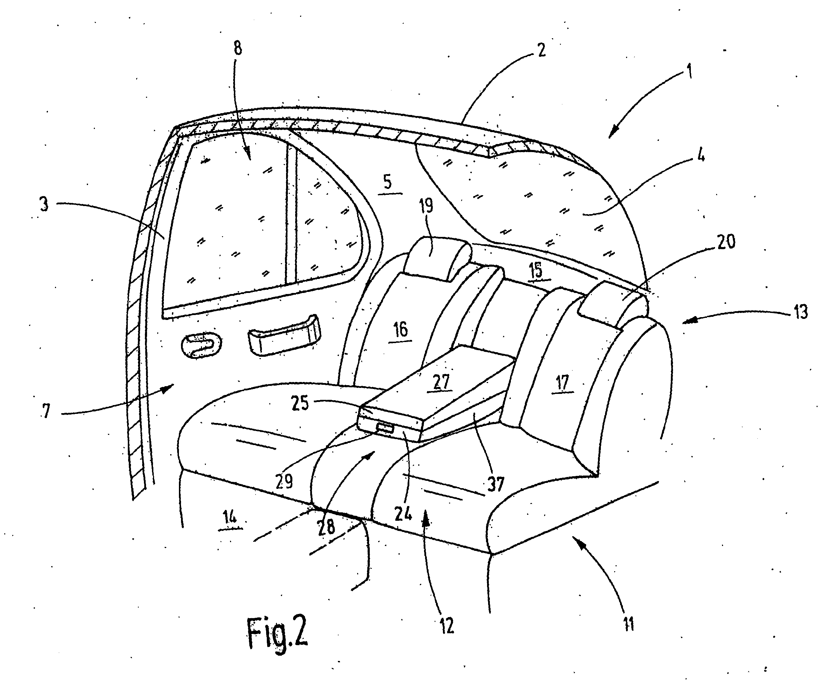

Während Fig. 1 den hochgeklappten Zustand der Mittelarmlehne 18 veranschaulicht zeigt Fig. 2 den heruntergeklappten Zustand. Wie aus Fig. 2 zu erkennen ist, setzt sich die Mittelarmlehne 18 aus einem Mittelarmlehnenunterteil 22 und einem Mittelarmlehnenoberteil 23, nachfolgend nur noch als Oberteil und Unterteil bezeichnet, zusammen. Das Oberteil 23 und das Unterteil 22 bilden jeweils Stirnseiten 24 und 25, die im Wesentlichen in Verlängerung zueinander verlaufen und in der heruntergeklappten Stellung gemäß Fig. 2 nach vorne und in der heraufgeklappten Stellung gemäß Fig. 1 nach oben zeigen. Das Oberteil 23 ist gegenüber dem Unterteil 22 beweglich gelagert.

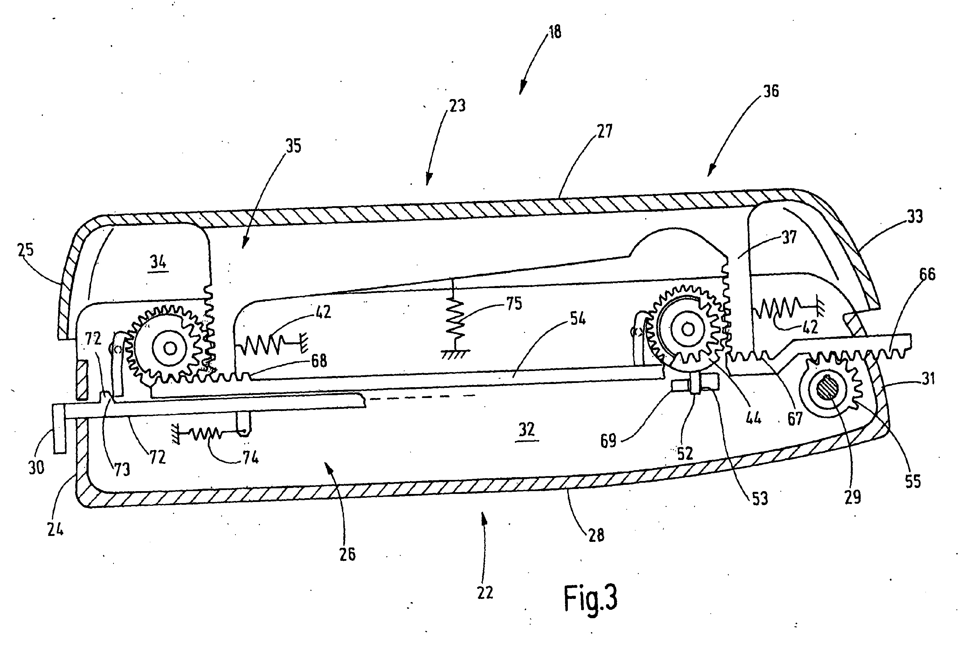

Ein innerhalb der Mittelarmlehne 18 vorhandener Mechanismus 26 (Fig. 3) steuert die Relativbewegung zwischen dem Oberteil 23 und dem Unterteil 22.

In der herruntergeklappten Stellung bildet eine Fläche des Oberteils 23 der Mittelarmlehne 18 eine Armauflagefläche 27, die in der Gebrauchsstellung etwa horizontal liegt. Das Unterteil 22 dagegen bietet in der hochgeklappten Stellung eine Rückenlehnenfläche 28.

Die Breite der beiden Stirnflächen 24, 25 über alles entspricht der Tiefe der beiden Rückenlehnenabschnitte 16 und 17 im Bereich deren Oberkante. In der hochgeklappten Stellung gemäß Fig. 1 stellt sich eine durchgehende Linie an der Oberkante der Rückenlehne 13 ein.

Im hochgeklappten Zustand ergänzt außerdem die Rückenfläche 28 den Verlauf zwischen den beiden Rückenlehnenabschnitten 16 und 17.

Die Funktion der dargestellen Mittelarmlehne 18 ist wie folgt: In der hochgeklappten Stellung gemäß Fig. 1 dient die Mittelarmlehne 18 als Rückenlehne für den dritten mittleren Sitz auf der Rücksitzbank 11. Wenn dieser Platz nicht benutzt ist, kann die Mittelarmlehne 18 aus der Stellung nach Fig. 1 in die Stellung nach Fig. 2 geklappt werden. Dabei schwenkt sie um eine in der Nähe der Rückenfläche 28 und an der Unterkante des Unterteils 22 gelegene Achse 29. Die Achse 29 liegt horizontal und außerdem quer zur Fahrzeuglängsachse.

Beim Herunterschwenken wird mit Hilfe des Mechanismus 26 außerdem dafür gesorgt, dass das Oberteil 23 gegenüber dem Unterteil 22 nach oben geschwenkt wird, um die Armauflagefläche 27 in eine ergonomisch angenehme Höhe zu bringen, falls eine solche Dicke zuvor eingestellt wurde, wie dies weiter unten beschreiben ist. Bei dieser Schwenkbewegung vergrößert sich die Dicke der Mittelarmlehne 18. Während im hochgeklappten Zustand die Dicke der Mittelarmlehne 18 immer der Dicke der beiden Rückenabschnitte 16 und 17 entspricht.

Die Schwenkbewegung nach unten wird entweder dadurch begrenzt, dass die Mittelarmlehne 18 mit ihrer Rückenfläche 28 auf dem Sitz 12 aufliegt oder indem entsprechende interne Anschläge vorgesehen sind.

Durch den Mechanismus 26 kann außerdem die Dicke der Mittelarmlehne 18 geändert werden. Hierzu wird ein Betätigungsknopf 30 eingedrückt. Das Oberteil 23 kann daraufhin in Richtung auf das Unterteil 22 niedergedrückt werden. Diese Verstellbarkeit kann entweder dazu benutzt werden, die Armauflagefläche 27 in eine ergonomisch günstige Höhe zu bringen oder dazu eine Durchladeöffnung (nicht gezeigt), die in der Schottwand zwischen dem Fahrgastraum und dem Kofferraum enthalten ist, vollständig freizugeben.

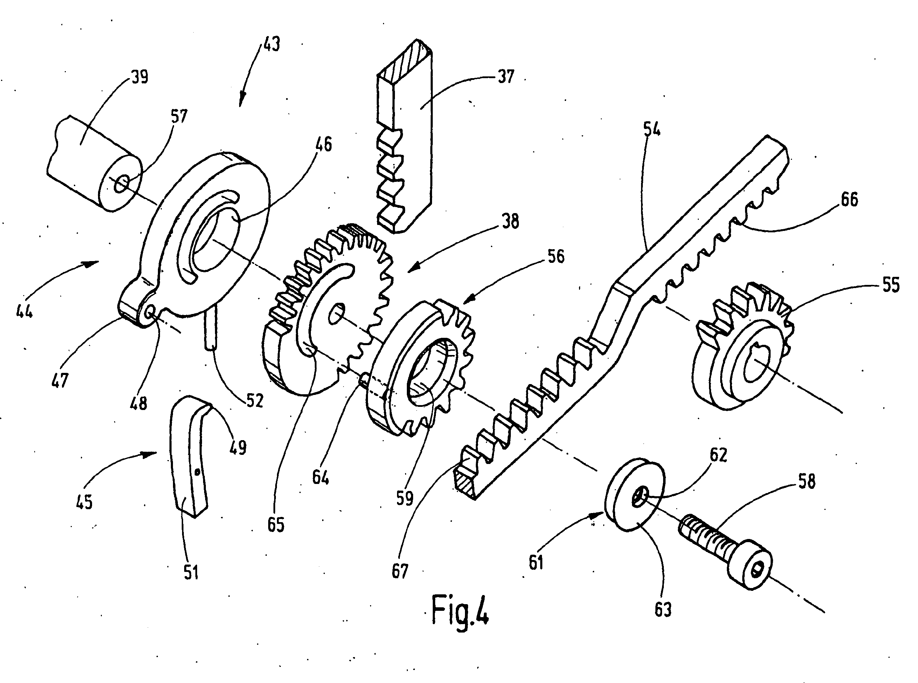

Anhand der Figuren 3 und 4 wird nunmehr nachstehend der Mechanismus 26 erläutert, der eine Verstellung des Oberteils 22 gegenüber dem Unterteil 23 ermöglicht.

Bevor im Einzelnen auf den inneren Aufbau der Mittelarmlehne eingegangen wird, sei darauf verwiesen, dass die Darstellungen aus Gründen der Übersichtlichkeit und der Verständlichkeit vereinfacht sind. So fehlen beispielsweise Führungen für die einzelnen verwendeten Schieber. Dem Fachmann ist klar, wie er die Schieber im Bedarfsfalle führt, um sie in der Eingriffstellung mit den entsprechenden Teilen zu halten. Auch die Schnittführung im Längsschnitt ist im Hinblick auf das Verständnis der Erfindung simplifiziert.

Ferner sei festgehalten, dass die Bezeichnungen wie "oben", "unten", "vorne" und "hinten" sich auf die normale Terminologie in einem Kraftfahrzeug beziehen und auf die Mittelarmlehne 18 angewendet werden, wenn sich diese, wie in Figur 3 gezeigt, in der heruntergeschwenkten Armlehnenposition befindet, in der die Armauflagefläche 27 etwa horizontal verläuft. "Rechts" und "links" bezeihen sich dagegen in der Regel auf die Darstellung in der Figur.

Das Unterteil 22 hat eine im Wesentlichen schalenförmige Gestalt und wird von der Rückenlehnenfläche 28 als Boden, der Stirnseite 24 sowie einer Rückwand 31 begrenzt. Die Rückwand 31 verläuft etwa parallel zu der Stirnwand 24. Die Seitenwände sind in der Figur nicht zu erkennen, statt dessen ist zu sehen, wie von der dem Boden bildendenden Rückenlehnenfläche 28 eine Zwischenwand 32 aufragt, zu der eine zweite Zwischenwand 32 im Abstand dazu parallel verläuft.

Das Oberteil 23 hat ebenfalls etwa schalenförmige Gestalt. Der Boden der Konfiguration bildet die Armauflagefläche 27 zusammen mit einer Seitenwandanordnung, gebildet durch die Stirnwand 25, eine Rückwand 33 sowie zwei zueinander parallele Seitenwände 34 von der wegen der Schnittdarstellung lediglich eine zu erkennen ist. Das Oberteil 23 übergreift das Unterteil 22.

Die beiden Teile werden durch zwei Lageranordnungen 35 und 36 verbunden bzw. auf Abstand gehalten.

Beide Lageranordnungen 35 und 36 sind so gestaltet, dass das Oberteil 23 gegenüber dem Unterteil bezüglich einer Querachse parallel zu der Anlenkungsachse 29 verschwenkbar ist, und außerdem der Abstand zwischen dem Oberteil 23 und dem Unterteil 22 durch eine translatorische Bewegung verstellbar ist. Die translatorische Achse steht etwa senkrecht auf den durch die Armauflagefläche 27 bzw. die Rückenlehnfläche 28 definierten Ebenen.

Die beiden Lageranordnungen 35 und 36 sind untereinder gleich. Es genügt, den Aufbau einer der beiden Lageranordnungen zu erläutern. Die einander entsprechenden Teile sind in den beiden Lageranordnungen 35 und 36 mit denselben Bezugszeichen versehen.

Die Lageranordnung 36 umfasst zwei von der Armauflagefläche 27 nach unten führende Zahnstangen 37, deren Abstand voneinander, bezogen auf die Quererstreckung der Mittelarmlehne 18, etwas größer ist als der Abstand der Zwischenwände 32. Ferner gehört zu der Lageranordnung 36 neben jeder Außenseite der beiden Zwischenwände 32 ein Zahnrad 38, wie es in der Explosionsdarstellung von Fig. 4 zu erkennen ist. Sowohl die Zahnstage 37 als auch das Zahnrad 38 tragen eine Geradverzahnung.

Die beiden Zahnräder 38 der Lageranordnung 36 stehen kämmend mit der jeweils zugehörigen Zahnstange 37 in Eingriff. Die beiden Zahnräder 38 sind durch eine Achse oder Welle 39 miteinander verbunden, die in den beiden zueinander parallelen Zwischenwänden 32 drehbar gelagert ist. Auf diese Weise wird eine Zwangssynchronisation der beiden Zahnräder 38 erhalten und in der Folge auch eine entsprechende Zwangssynchronisation der mit Ihnen in Eingriff stehenden Zahnstangen 37. Hierdurch wird eine Parallelführung erzwungen, die ein Verkippen der Armauflagefläche 27 bezüglich einer zu der Längsachse der Mittelarmlehne 18 parallelen Achse verhindert.

Mittels einer oder mehrerer Federn 41, die von der Rückseite her gegen die Zahnstange 37 wirken, wird die betreffende Zahnstange 37 mit dem zugehörigen Zahnrad 38 in Eingriff gehalten.

Da die vordere Lageranordnung 35 in der gleichen Weise gestaltet ist, hat das Oberteil 23 gegenüber dem Unterteil mehrere Freiheitsgrade. Das Oberteil 23 kann gegenüber dem Unterteil sowohl im Bereich der vorderen Kante als auch im Bereich der Rückseite angehoben und an der jeweils anderen Seite abgesenkt werden. Das Oberteil 23 vollführt dabei eine Kipp- oder Schwenkbewegung gegenüber dem Unterteil bezüglich einer Achse, die zu der Achse 29 parallel liegt. Beim Verkippen tritt aus der Sicht der Zahnräder 38, die nahe der Stirnseite oder der Rückwand 31 liegen, eine scheinbare Abstandsänderung der betreffenden Zahnstangen 37 auf. Diese scheinbare Abstandsänderung führt lediglich zu einem etwas größeren Zahnflankenspiel im Eingriff zwischen der Zahnstange 37 und dem Zahnrad 38 ohne ansonsten negative Auswirkungen zu haben.

Aus dieser Funktionsbeschreibung ergibt sich auch, dass der Abstand der Zahnstangen 37 voneinander, die auf einer Seite der Mittelarmlehne 18 angeordnet sind, mit dem Achsabstand der Zahnräder 38 auf derselben Seite nicht ganz übereinstimmt. Der Abstand ist etwas größer.

Mit Hilfe der insgesamt vier Zahnräder 38 in Verbindung mit den insgesamt vier Zahnstangen 37 lässt sich eine beliebige Verstellung des Oberteils 23 gegenüber dem Unterteil 22 erzielen. Um die jeweilige Position zu fixieren, ist eine Sperreinrichtung vorgesehen, die lediglich, beispielsweise bei den Zahnrädern 38, auf der Seite der Mittelarmlehne 18 erforderlich ist, die dem Betrachter zugekehrt ist, dh. bezogen auf die Fahrzeuggeometrie auf der linken Seite.

Zu der Sperreinrichtung 43 gehört ein Klinkenträger 44, der drehbar auf der Achse 39 gelagert ist, sowie eine an dem Klinkenträger schwenkbar gelagerte Sperrklinke 45. Der Klinkenträger 44 hat eine kreisscheibenförmige Gestalt mit einer Durchgangsbohrung 46, die als Lagerbohrung dient und durch die die Achse 39 hindurch führt. In Richtung auf die vorderen Stirnflächen 24 und 25 ist der Klinkenträger 44 mit einem Fortsatz 47 versehen, der eine Bohrung 48 enthält, in der ein nicht veranschaulichter Lagerstift sitzt. Auf dem achsparallel zu der Welle 39 die Klinke 45 schwenkbar gelagert ist. Der Lagerstift ist aus Übersichtlichkeitsgründen nicht weiter veranschaulicht.

Die Sperrklinke 45 trägt eine Sperrnase 49, die dazu eingerichtet ist, mit der Verzahnung des Zahnrades 38 wahlweise in Eingriff bringbar zu sein. Auf der von der Sperrnase 49 abliegenden Seite ist die Sperrklinke 45 mit einem Betätigungsarm 51 versehen.

Wie Fig. 3 erkennen lässt, greift die Sperrklinke auf einer Seite in die Verzahnung des Zahnrades 38 ein, die der Seite mit dem Eingriff zwischen dem Zahnrad 38 und der Zahnstange 37 gegenüberliegt.

Eine aus Übersichtlichkeitsgründen nicht gezeigte Feder, spannt die Sperrklinke 45 in die Eingriffsstellung mit der Verzahnung des Zahnrades 38 vor.

Von der Umfangsseite des scheibenförmigen Klinkenträgers 44 führt noch ein Blockierstift 42 nach unten.

Der Blockierstift 52 wirkt in einer noch zu beschreibenden Weise mit einem auf der Zwischenwand 32 ortsfesten Anschlag 53 zusammen.

Mittels einer aus Übersichtlichkeitsgründen weggelassenen Vorspannfeder wird der Klinkenträger 44 auf der Achse 39 vorgespannt, damit er bevorzugt mit dem Blockierstift 52, an dem Anschlag 53 anliegt.

Wenn die Mittelarmlehne 18 in ihre "dickste Stellung" eingestellt ist, ist sie naturgemäß zu dick um, wie oben beschrieben, in den Zwischenraum zwischen die beiden Rückenlehnenabschnitte 16 und 17 zu passen. Die Armauflagefläche 23 würde an der Schottwand anstoßen. Damit sie unabhängig von der durch den Benutzer gewillkürten Einstellposition in die dünnste Stellung überführt werden kann, ist eine Betätigungseinrichtung vorhanden. Die Betätigungseinrichtung umfasst eine Betätigungsstange 54, ein auf der Achse 29 drehfest sitzendes Betätigungszahnrad 55 sowie ein Steuerzahnrad 56, das koaxial zu dem Zahnrad 38 gelagert ist.

Der Klinkenträger 44, das Zahnrad 38 und das Steuerzahnrad 56 bilden eine Art Sandwich-Konstruktion, die mit der Achse 39 verschraubt ist. Die Achse 39 enthält hierzu eine Gewindebohrung 57 zur Aufnahme einer Befestigungsschraube 58, die durch das Sandwich-Paket hindurchführt.

Das Zahnrad 38 liegt im montierten Zustand gegen die plane Stirnfläche der Achse 39 an. Durch eine entsprechende Lagerbohrung 59 in dem Steuerzahnrad 56 führt ein Distanzstück 61 mit einer koaxialen Befestigungsbohrung 62. Die Lagerbohrung 59 ist in Richtung von der Achse 39 weg mit einer schrägen Anfassung versehen, die mit einer Schulter 63 an dem Distanzstück zusammenwirkt.

Im montierten Zustand ist der Klinkenträger 44 auf der Achse 39 drehbar. Das Zahnrad 38 ist gegen die Stirnseite der Achse 39 festgeschraubt, und zwar indem es mit Hilfe der Schraube 58 und dem Distanzstück 61 gegen diese Fläche angedrückt wird. Das Distanzstück 61 ist so gestaltet, dass auf ihm bei gleichzeiger axialer Sicherung das Steuerzahnrad 56 drehbar ist. Der Klinkenträger 44 liegt zwischen der Zwischenwand 32 und dem Zahnrad 38.

Auf der dem Zahnrad 38 zugekehrten Seite trägt das Steuerzahnrad 56 einen Mitnahmezapfen 64, der in ein Langloch 65 eingreift, das in dem Zahnrad 38 vorgesehen ist, und sich mit konstantem Radius um die Drehachse des Zahnrades 38 krümmt. Die Länge des Langlochs und dessen Lage relativ zu dem Mitnahmezapfen 64 ergibt sich aus der unten gegebenen Funktionsbeschreibung.

Die Betätigungsstange 54 weist mehrere stirnverzahnte Abschnitte 66, 67 und 68 auf. Der verzahnte Abschnitt 66 steht mit dem Antriebszahnrad 55 in Eingriff. Die Verzahnung 67 mit dem Zahnrad 38, das der hinteren Rückwand 31 benachbart ist und die Verzahnung 38 kämmt mit dem Zahnrad 56 neben der vorderen Stirnseite 24. Somit werden über die Stange 54 die beiden Zahnräder 56 synchron zwangsweise betätigt, wenn die Stange 54 hin und her geschoben wird. Das hin und her schieben wird ausgelöst durch die Schwenkbewegung der Armlehne 18 um die Achse 29. Dabei wälzt sich die Verzahnung 66 auf dem Zahnrad 55 ab. Hierdurch wird die Stange 54 in Richtung auf die vordere Stirnseite 24 vorgeschoben. Um diese Bewegung zu erreichen, liegt die Verzahnung 66 in der Armlehnenstellung oben auf dem Zahnrad 55. Hingegen ist die Stelle des Eingriffs mit den Zahnrädern 56 auf der Unterseite. Dadurch werden die Zahnräder 56 im Uhrzeigersinn gedreht, wenn die Stange 54, bezogen auf Fig. 3, nach links wandert, was dem Hochklappen entspricht.

Die Vorkehrungen, die erforderlich sind, um die Stange 54 zu führen und mit den Zahnrädern 56 in Eingriff zu halten, sind aus Übersichtlichkeitsgründen nicht dargestellt. Der Fachmann weiß, wie er solche Führungen gestalten muss, um die unten beschriebene Funktionalität zu erhalten.

Die Stange 54 wirkt nicht nur mit den Zahnrädern 56 zusammen, sondern auch mit dem Klinkenträger 44, hierzu ist sie an ihrer Unterseite mit zwei seitlich vorstehenden Fortsätzen 69 versehen, von denen einer in Fig. 3 bei der rechten Lageranordnung 36 gezeigt ist. Ein weiterer Fortsatz dieser Art befindet sich in funktionsmäßig derselben Position bei der linken Lageranordnung 35.

Mit Hilfe des Fortsatzes 69 wird, zusammen mit dem Anschlag 53, wird die Position des Klinkenträgers 44 fixiert, wenn die Armlehne 18 in die Armlehnenfunktionsstellung herunter geschwenkt ist. In dieser Stellung ist die Stange 54 aufgrund des formschlüssigen Zusammenwirkens mit dem Zahnrad 55 am weitesten, bezogen auf Fig. 2, nach rechts verschoben. Der Blockierstift 52 ist zwischen dem Anschlag 53, der auf der Zwischenwand 32 ortsfest sitzt, und dem Fortsatz 69 eingesperrt. Damit kann der Klinkenträger 44 sich weder im Uhrzeigersinn noch gegen den Uhrzeigersinn drehen, mit der Folge, dass das mit dem Klinkenträger 44 über die Sperrklinke 45 verklinkte Zahnrad 38 ebenfalls in beiden Drehrichtungen fixiert ist. Die Kraft läuft über die Sperrklinke 45, die entsprechend ausgebildet ist, damit sie, gleichgültig in welcher Drehrichtung, das Zahnrad 38 belastet wird, aus der Verklinkung nicht heraus gedrängt wird. Von der Sperrklinke 45 geht die Kraft weiter über den Klinkenträger 44 und den Blockierstift 52 entweder zu dem Anschlag 53 oder zu dem Fortsatz 69, je nach Drehrichtung. Das koaxiale Zahnrad 38 auf der anderen Seite der Welle 39 ist so ebenfalls blockiert.

Um die Verklinkung zwischen der Sperrklinke 45 und dem Zahnrad 38 willkürlich wahlweise aufheben zu können, ist mit dem Betätigungsknopf 30 eine Auslösestange 71 gekuppelt. Die Auslösestange 71 trägt auf ihrer Oberseite neben jeder Sperrklinke 45 einen Zahn 72 mit einer Betätigungsfläche 73. Der Zahn 72 ist so neben der Sperrklinke 45 angeordnet, dass er mit dem Betätigungsarm 51 zusammenwirken kann. Die Fläche 73 ist eine gekrümmte Fläche mit einem Krümmungsradius entsprechend dem radialen Abstand dieser Fläche von der Drehachse des Klinkenträgers 44.

Mittels einer schematisch angedeuteten Zugfeder 74 wird die Auslösestange 71 nach links gegen einen nicht gezeigten Anschlag gezogen, so dass hinreichend Luft zwischen dem Zahn 72 und dem Betätigungsarm 51 vorhanden ist.

Der Übersichtlichkeit halber sind auch keine Führungen oder sonstige Anschläge veranschaulicht, die erforderlich sind, um die Auslösestange 71 translatorisch zu führen und den Betätigungshub zu begrenzen. Wie so etwas zu gestalten ist, ist dem Fachmann geläufig und braucht hier nicht in ex tenso erläutert zu werden.

Als Ausgangspunkt für die Erläuterung der Funktion wird die Armlehnenstellung gemäß Fig. 2 bzw. Fig. 3 gewählt. Die Armlehne liegt mit der Rückenlehnenfläche 28 auf der Sitzbank auf. Die Armauflagefläche zeigt nach oben. Es wird ferner angenommen, dass das Armlehnenoberteil 23 entgegen der Darstellung in Fig. 3 vollständig abgesenkt ist.

In der heruntergeschenkten Position entsprechend Fig. 2 ist die Stange 54 am weitsesten nach rechts verschoben. Der Fortsatz 69 sperrt zusammen mit dem Anschlag 53 den Blockierzapfen 52 ein. Der Klinkenträger 44 ist drehfest arretiert.

Die Zahnräder 38 und 56 stehen relativ zueinander in einer solchen Stellung, dass der Zapfen 64 den größten Abstand von dem in Umfangsrichtung liegenden Ende des gekrümmten Langloches 65 hat.

Wenn der Benutzer in dieser Einstellung der Mittelarmlehne 18 die Mittelarmlehne nach oben in die Position gemäß Fig. 1 klappt, wälzt sich die Stange 54 mit der Verzahnung 66 auf dem drehfest sitzenden Zahnrad 55 ab. Hierdurch verschiebt sich die Stange 54 innerhalb der Mittelarmlehne 18 in Richtung auf die Stirnseite 24, wodurch gleichzeitig die Fortsätze 69, bezogen auf die Darstellung von Fig. 3, nach links bewegt werden und damit den Blockierzapfen 52 bei jedem der Sperrklinkenträger 44 freigeben. Die Bewegung der Stange 54 nach links bewirkt eine Drehung der Zahnräder 56 im Uhrzeigersinne. Da die Mittelarmlehne bereits in die dünnste Stellung gebracht war, laufen die Zahnräder 56 leer und drehen nicht die Zahnräder 38, die ohnehin in der Stellung für die dünnste Armlehnenposition eingestellt und verriegelt sind.

Beim Herunterschwenken der Mittelarmlehne wird die durch das Heraufschwenken verursachte Bewegung der Stange 54 rückgängig gemacht und es ist am Schluss der Absenkbewegung wiederum der Blockierstift 52 bei jedem Klinkenträger 44 eingesperrt, um der Sperrklinke 55 einen ortsfesten Widerlagerpunkt zu schaffen.

Der Benutzer will nun die Dicke der Armlehne 18 vergrößern. Er betätigt hierzu den Betätigungsknopf 30 und schiebt damit die Stange 71 gegen die Wirkung der Feder 74 nach rechts. Dies hat zur Folge, dass beide Sperrklinken 51 im Gegenuhrzeigersinne aus dem Eingriff mit den Verzahnungen der Zahnräder 38 ausgehoben werden. Eine oder mehrere Druckfedern 75, die zwischen dem Oberteil 23 und dem Unterteil 22 wirksam sind und von denen eine in der Figur 3 bei 74 schematisch angedeutet ist, sind bestrebt, das Oberteil 23 bei der Aufhebung der Verklinkung nach oben zu bewegen. Wenn der Benutzer keine weitere Kraft gegen das Oberteil 23 ausübt, wird es sich in die maximal angehobene Stellung bewegen, die durch nicht veranschaulichte Anschläge an dem Oberteil 23 und dem Unterteil 22 begrenzt wird. Diese maximale Dickeneinstellung zeigt beispielsweise die Position gemäß Fig. 3.

Durch das Heraufbewegen des Oberteils 23 drehen sich die sichtbaren Zahnräder 38 im Gegenuhrzeigersinne ebenso wie die abgedeckten Zahnräder 38 auf der anderen Seite der Zwischenwände 32. In der höchsten Stellung des Oberteils 23 steht das im Uhrzeigerrichtung liegende Ende des Langloches 65 unmittelbar neben dem Mitnahmezapfen 64.

Sobald die Position erreicht ist, lässt der Benutzer die Betätigungstaste 30 los. Die Feder 64 zieht die Stange 71 zurück und die Sperrklinken 45 können in die Verzahnungen ihrer Zahnräder 38 einrasten, indem die zuvor erwähnten Federn die Sperrklinken 45 entsprechend vorspannen.

Die Federn sind aus Gründen der Übersichtlichkeit aus Fig. 3 weggelassen. Dem Fachmann ist klar, wie er solche Federn unterbringen kann, eine zeichnerische Darstellung ist nicht erforderlich.

Nach dem Einrasten der Sperrklinken 45 ist jedes der Zahnräder 38 über Formschluss mit dem zugehörigen Klinkenträger 44 gekoppelt.

Da die Zahnräder 38 paarweise über die Welle 39 gekoppelt sind, wird eine zwangsläufige Parallelführung bezüglich der Längsachse der Armlehne 18 erreicht. Verklemmungen können nicht stattfinden.

Es genügt obendrein, dass nur auf einer Seite der Achse 39 die Sperre durch die Sperrklinke 45 bewerkstelligt wird. Wegen der drehfesten Kopplung der Zahnräder 38 durch die Welle 39 wird selbsttätig das Zahnrad 38 auf der anderen Seite mit blockiert.

Wenn der Benutzer nun seinen Arm auf die Armauflage 27 auflegt und bestrebt ist, damit das Oberteil 23 nieder zu drücken, läuft die Kraft über die Zahnstangen 37 zu den Zahnrädern 38. Von hier läuft die Kraft weiter zu der Sperrklinke 45 und wird in den Klinkenträger 44 eingeleitet. Wie unschwer zu erkennen ist, ist eine auf die Armauflagefläche 27 nach unten wirkende Kraft bei dieser Art der Anwendung bestrebt, den Klinkenträger 44 im Uhrzeigersinne zu drehen. Jedoch kann eine solche Drehung nicht stattfinden, weil der Blockierstift 42 gegen den Anschlag 69 anstößt, der Anschlag 69 wiederum ist einstückig mit der Stange 54, die ihrerseits über die Verzahnung 66 formschlüssig mit dem Drehfesten Zahnrad 55 verbunden ist.

Der Blockierstift 52 kann also nicht aus der Stellung nach Fig. 3 heraus zu bewegen, selbst wenn von oben Druck auf die Mittelarmlehne 18 ausgeübt wird.

Die vom Blockierstift 52 ausgehende Kraft wäre bestrebt, die Stange 54 nach links zu bewegen, woran sie jedoch wegen der formschlüssigen Verbindung mit dem Zahnrad 55 gehindert ist. Sie könnte sich nur dann nach links bewegen, wenn gleichzeitig die Armlehne 18 nach oben schwenkt, also entgegen der Kraft die bestrebt wäre, über den beschriebenen kinematischen Weg die Stange 54 zu verschieben.

Wenn durch Betätigung der Stange 71 die Verkl-inkung zwischen den Sperrklinken 45 und den Zahnrädern 38 aufgehoben ist, kann der Benutzer den Abstand zwischen dem Oberteil 23 und dem Unterteil 22 im Rahmen des zulässigen Hubs beliebig einstellen, die Unterteilung des Einstellwegs ergibt sich aus der Teilung des Zahnrades 38.

Es ist obendrein möglich, im Bereich der vorderen Lageranordnung 35 eine andere Höhe der Armauflage 27 einzustellen als im Bereich der hinteren Lageranordnung 36. Somit ist es jederzeit möglich nach Betätigen der Betätigungstaste 30 die Armauflagefläche 27 bezüglich einer Querachse zu kippen und durch Loslassen der Taste 30 die gewählte Einstellung "einzufrieren". Bei jeder Lageranordnung 35, 36 wird entsprechend die dort vorhandene Sperreinrichtung 43 wirksam und fixiert die gewünschte Höheneinstellung.

Um das Verhalten beim Hochklappen zu verstehen, wird nunmehr wiederum der Einfachheit halber davon ausgegangen, dass die Armauflagefläche 27 in die höchste Stellung gebracht ist, und zwar sowohl am vorderen als auch am hinteren Ende.

Wenn der Benutzer nun die Armlehne 18 nach oben schwenkt, wird, wie bereits weiter vorne beschrieben, die Stange 54 aufgrund der Abwälzbewegung der Verzahnung 66 auf dem Zahnrad 55, bezogen auf die Darstellung von Fig. 3, nach links verschoben. Hierdurch werden die Zahnräder 56 im Uhrzeigersinn gedreht. Da nun der Maximalhub erforderlich ist um die Armlehne in die dünnste Position zu bringen, nehmen die Mitnehmerzapfen 64 das benachbarte Zahnrad 38 sogleich mit und drehen es somit ebenfalls im Uhrzeigersinne. Die Zahnstangen 37 werden dadurch gegen die Wirkung der Feder 75 synchron nach unten gezogen. Die Dicke der Armlehne 18 vermindert sich also zunehmend in dem Maße, wie sie nach oben in die Ruhestellung nach Fig. 1 geklappt wird.

Durch das Verschieben der Stange 54 werden auch die Anschläge 69 wegbewegt, so dass die mit dem Klinkenträger 34 formschlüssig gekuppelten Zahnräder 38 an der Drehbewegung durch die Klinkenträger 44 nicht gehindert werden können.

Darüber hinaus bleibt auch während der nun erfolgenden Schwenkbewegung des Klinkenträgers 44, der synchron mit dem Zahnrad 38 mitläuft, die Verklinkung bestehen. Wie Eingangs erwähnt, haben die Zähne 72 eine Flankenfläche 73, die einem Kreisbogenausschnitt entspricht. Die Betätigungsarme 51 können ohne mit den Flächen 53 zu kollidieren an diesen vorbeilaufen.

Am Schluss der Schwenkbewegung nach oben, d.h. einer Drehbewegung der Armlehne 18 bezogen auf Fig. 3 im Uhrzeigersinne, ist die Stange 74 in Richtung auf die Stirnseite 24 verschoben. Die Klinken 45 sind ausgehend von der Position, wie sie Fig. 3 zeigt, im Uhrzeigersinne nach oben in Richtung auf die Zahnstange 37 gewandert. Das Gleiche gilt für den Blockierzapfen 62, der sich ebenfalls um denselben Drehwinkel von dem Anschlag 53 entfernt hat.

Wie sich aus der Funktionsbeschreibung ergibt, haben sich beide Sperreinrichtungen 43 im verklinkten Zustand mit ihren Zahnrädern 38 zusammen mit dem Zahnrad 56 gedreht. Der Hub ist so groß, dass am Schluss der Schwenkbewegung die Armlehne 18 dieselbe Dicke zeigt, wie sie auftritt, wenn die Armlehne 18 in der heruntergeschwenkten Stellung auf die geringste Dicke eingestellt ist.

Aus der Funktionsbeschreibung ergibt sich die effektive Länge des Langlochs 65 und dessen Lage zu dem Mitnehmerzapfen 64. Bei einer Zwischeneinstellung der Dicke der Mittelarmlehne ist der Drehhub des Klinkenträgers entsprechend vermindert. Er wird zu Null wenn die heruntergeklappte Armlehne 18 auf die kleinste Dicke eingestellt ist.

Beim Herunterschwenken einer auf die größten Dicke eingestellten Armlehne 18 wird die Bewegung der Stange 54 rückgängig gemacht, d.h. die Zahnräder 56 werden von ihr im Gegenuhrzeigersinne gedreht. Die bereits erwähnte und in der Zeichnung aus Übersichtlichkeitsgründen nicht dargestellte Feder bzw. die Feder 75 sorgt dafür, dass in dem Maße in dem der Mitnahmezapfen 64 zurückweicht auch das Zahnrad 38 im Gegenuhrzeigersinne gedreht werden kann, solange, bis schlussendlich der Blockierstift 62 an dem Anschlag 63 ankommt. Gleichzeitig damit wird auch der Fortsatz 63 seine Endlage erreichen und, wie oben beschrieben, wiederum den Blockierstift 52 einsperren, damit die Armauflagefläche 27 ohne auszuweichen von oben her belastbar ist.

Das erwähnte Zusammenwirken zwischen den verschiedenen Bauteilen der Sperreinrichtung 43 gilt naturgemäß, wie der Fachmann ohne weiteres erkennen kann, für beide Gelenkanordnungen 35 und 36, ohne dass dies im Einzelnen erwähnt werden muss oder zwischen diesen unterschieden werden muss.

Die einzige Einschränkung besteht insofern, als beide Gelenkanordnungen auf unterschiedlichen Höhen eingerastet werden können.

Zu beachten wäre noch, dass die Sperrklinke 45 derart ausgebildet ist, dass sie nicht bei einem Drehmoment des Zahnrades 38, das im Gegenuhrzeigersinne wirkt, aus der Verzahnung heraus gedrängt wird.

Da der Drehhub des Zahnrads 38 bei der praktischen Ausführungsform etwa einem Viertelkreis entspricht, kann die Verzahnung für die Sperrklinke 45 an dem Zahnrad 38 anders gestaltet sein, als die Verzahnung die mit der Zahnstange 37 in Eingriff steht und in der Regel wohl eine Evolventenverzahnung ist.

Die vorstehende Erläuterung bezieht sich auf die Gestaltung der Armlehne als Mittelarmlehne in einem Kraftfahrzeug. Es ist aber unschwer zu erkennen, dass, zumindest der Höhenverstellmechanismus, auch bei Seitenarmlehnen zur Anwendung finden kann, die ansonsten ortsfest sind. Es genügt hierzu die Stange 54 weg zu lassen. Ebenfalls kann das Zahnrad 56 sowie der Klinkenträger 44 entfallen. Es genügt, wenn die Klinke 45 ortsfest neben dem verbleibenden Zahnrad 38 gelagert ist, um die Höhenverstellung des Oberteils gegenüber dem Unterteil zu ermöglichen. Eine gesonderte Darstellung dieser abgemagerten Version für eine Seitenarmlehne oder eine vordere Mittelkonsole braucht der Fachmann für das Verständnis nicht.

Eine Armlehne für Kraftfahrzeuge, insbesondere eine Mittelarmlehne, setzt sich aus einem Ober- und einem Unterteil zusammen. Diese beiden Teile der Armlehne sind durch zwei Gelenkanordnungen miteinander verbunden. Jede der Gelenkanordnungen hat zwei Freiheitsgrade, nämlich eine rotatorische Achse und eine translatorische Achse. Außerdem sind jeder Gelenkanordnung Sperreinrichtungen zugeordnet, um die Gelenkanordnung in beliebigen translatorischen Stellungen zu verriegeln.

## Patentansprüche

1. Armlehne für Kraftfahrzeugsitze (11), insbesondere Mittelarmlehne (18), insbesondere für Rücksitzbänke von Kraftfahrzeugen,
mit einem Unterteil (22),
mit einem Oberteil (23), das eine Armauflagefläche (27) trägt,
mit einer ersten Gelenkeinrichtung (35,36), die zumindest eine rotatorische Achse aufweist um das Oberteil (23) mit dem Unterteil (22) zu verbinden, wobei die rotatorische Achse quer zu der Längsachse der Armlehne (18) verläuft,
mit einer zweiten Gelenkeinrichtung (35,36), die zumindest eine rotatorische Achse und eine translatorische Achse aufweist um das Oberteil (23) mit dem Unterteil (22) an einer Stelle zu verbinden, die von der ersten Gelenkeinrichtung (35,36) beabstandet ist, wobei die rotatorische Achse quer zu der Längsachse der Armlehne (18) und die translatorische Achse in der Gebrauchslage der Armlehne (18) zumindest angenähert senkrecht steht, und
mit einer Sperreinrichtung (43) zum Arretieren wenigstens der zweiten Gelenkeinrichtung (35,36) in der jeweils eingestellten Position.

2. Armlehne nach Anspruch 1, **dadurch gekennzeichnet, dass** das Unterteil (22) über eine horizontale Lagerachse (29) mit dem Kraftfahrzeug verbunden ist, die quer zu der Längsachse des Unterteils (22) verläuft um die Armlehne (18) zwischen einer etwa horizontal ausgerichteten Gebrauchsstellung und einer etwa vertikal ausgerichteten Ruhestellung hin und her schwenkbar zu lagern.

3. Armlehne nach Anspruch 1, **dadurch gekennzeichnet, dass** sie eine Steuereinrichtung (54,55,56) aufweist, die durch die Schwenkbewegung der Armlehne (18) betätigbar ist um beim Hochschwenken die Armlehne (18) in eine Stellung zu bringen, bei der das Oberteil (23) und das Unterteil (22) möglichst dicht aneinander liegen.

4. Armlehne nach Anspruch 3, **dadurch gekennzeichnet, dass** die Steuereinrichtung (54,55,56) über eine Memoryfunktion verfügt, durch die die Armlehne (18) beim Herunterschwenken in die zuvor eingestellt Relativstellung zwischen dem Oberteil (23) und dem Unterteil (22) gebracht wird.

5. Armlehne nach Anspruch 1, **dadurch gekennzeichnet, dass** das Oberteil (23) schalenartig ist.

6. Armlehne nach Anspruch 1, **dadurch gekennzeichnet, dass** das Oberteil (23) das Unterteil (22) übergreift.

7. Armlehne nach Anspruch 1, **dadurch gekennzeichnet, dass** auch die erste Gelenkeinrichtung (35,36) zusätzlich eine translatorische Achse aufweist.

8. Armlehne nach Anspruch 1, **dadurch gekennzeichnet, dass** die beiden Gelenkeinrichtungen (35,36) gleich aufgebaut sind.

9. Armlehne nach Anspruch 1, **dadurch gekennzeichnet, dass** die erste Gelenkeinrichtung (35,36) ein Scharniergelenk ist, das sich vorzugsweise an dem Vorderende der Armlehne (18) befindet.

10. Armlehne nach Anspruch 1, **dadurch gekennzeichnet, dass** wenigstens die zweite Gelenkeinrichtung (35,36) wenigstens ein Zahnrad (38) aufweist, dessen Drehachse bezogen auf die Gebrauchslage horizontal ausgerichtet ist und dessen Drehachse quer zu der Längsachse der Armlehne (18) liegt.

11. Armlehne nach Anspruch 10, **dadurch gekennzeichnet, dass** zwei Zahnräder (38) vorhanden sind, die bezüglich einer Vertikalebene voneinander beabstandet sind und die über eine Welle (39) starr miteinander gekoppelt sind.

12. Armlehne nach Anspruch 10, **dadurch gekennzeichnet, dass** wenigstens zu der zweiten Gelenkeinrichtung (35,36) wenigsten eine Zahnstange (37) gehört, die mit dem Zahnrad (38) in Eingriff steht.

13. Armlehne nach Anspruch 12, **dadurch gekennzeichnet, dass** eine Federeinrichtung (41) vorhanden ist, die die jeweilige Zahnstange (37) in die Eingriffsstellung mit dem jeweiligen Zahnrad (38) vorspannt.

14. Armlehne nach Anspruch 10, **dadurch gekennzeichnet, dass** dem Zahnrad (38) eine willkürlich zu betätigende Drehsperreinrichtung (43) zugeordnet ist.

15. Armlehne nach Anspruch 14, **dadurch gekennzeichnet, dass** die Drehsperreinrichtung (43) einen Lagerträger (44) aufweist, auf dem eine Sperrklinke (45) schwenkbar gelagert ist, die in die Eingriffsstellung mit dem Zahnrad (38) vorgespannt ist.

16. Armlehne nach Anspruch 15, **dadurch gekennzeichnet, dass** der Lagerträger (44) koaxial zu dem Zahnrad (38) drehbar gelagert ist.

17. Armlehne nach Anspruch 15, **dadurch gekennzeichnet, dass** dem Lagerträger (44) ein ortsfester Anschlag (53) zugeordnet ist.

18. Armlehne nach Anspruch 15, **dadurch gekennzeichnet, dass** dem Lagerträger (44) eine Blockiereinrichtung (54,69) zugeordnet ist, die den Lagerträger (44) gegen den Anschlag (53) festhält.

19. Armlehne nach Anspruch 10, **dadurch gekennzeichnet, dass** dem Zahnrad (38) eine Betätigungseinrichtung (54,55,56) zugeordnet ist, die die Schwenkbewegung der Armlehne (18) um ihre Lagerachse (29) in eine Drehbewegung des Zahnrads (38) umsetzt.

20. Armlehne nach Anspruch 19, **dadurch gekennzeichnet, dass** der Betätigungshub der Betätigungseinrichtung (54,55,56) von der Einstellung des Abstand zwischen dem Oberteil (23) und dem Unterteil (22) abhängig ist.

21. Armlehne nach Anspruch 19, **dadurch gekennzeichnet, dass** zu der Betätigungseinrichtung (54,55,56) eine Zahnstange (54) gehört, die mit einem auf der Lagerachse (29) der Armlehne (18) sitzenden Zahnrad (55) zusammenwirkt.

22. Armlehne nach Anspruch 19, **dadurch gekennzeichnet, dass** das auf der Lagerachse (29) der Armlehne (18) sitzende Zahnrad (55) drehfest ist.

23. Armlehne nach Anspruch 19, **dadurch gekennzeichnet, dass** zu der Betätigungseinrichtung (54,55,56) ein Steuerzahnrad (56) gehört, das koaxial zu dem Zahnrad (38) der Gelenkanordnung (35,36) angeordnet und mit diesem über einer Kulissenanordnung (64,65) gekuppelt ist.

24. Armlehne nach Anspruch 23, **dadurch gekennzeichnet, dass** die Kulissenanordnung (64,65) einen Zapfen (64) an einem der beiden Zahnräder (38,56) und eine Öffnung (65) in dem jeweils anderen Zahnrad (38,56) umfasst.

25. Armlehne nach Anspruch 1, **dadurch gekennzeichnet, dass** eine Vorspanneinrichtung (75) vorhanden ist, die das Oberteil (23) von dem Unterteil (22) weg vorspannt.

26. Armlehne nach Anspruch 10, **dadurch gekennzeichnet, dass** eine manuell bedienbare Auslösetaste (30) vorgesehen ist, die mit der Sperrklinke (45) einer der beiden Gelenkeinrichtungen (35,36) zusammenwirkt.

27. Armlehne nach Anspruch 1, **dadurch gekennzeichnet, dass** das Unterteil (22) auf seiner Außenseite eine Rückenpolsterfläche (28) trägt.

## Claims

1. Arm rest for motor vehicle seats (11), in particular a central arm rest (18), in particular for rear seating arrangements in motor vehicles,
with a lower part (22)
with an upper part (23), which bears an arm support surface (27),
with a first articulation means (35, 36), which has at least one rotatory axis to connect the upper part (23) to the lower part (22), wherein the rotatory axis runs transversely to the longitudinal axis of the arm rest (18),
with a second articulation means (35, 36), which has at least one rotatory axis and one translatory axis to connect the upper part (23) to the lower part (22) at a location spaced from the first articulation means (35, 36), wherein the rotatory axis stands transversely to the longitudinal axis of the arm rest (18) and the translatory axis stands at least approximately perpendicular in the position of use of the arm rest (18), and with a locking means (43) for locking at least the second articulation means (35, 36) in the respectively adjusted position.

2. Arm rest according to claim 1, **characterised in that** the lower part (22) is connected to the motor vehicle by means of a horizontal bearing axis (29), which runs transversely to the longitudinal axis of the lower part (22) in order to arrange the arm rest (18) so that it can pivot between an approximately horizontally aligned position of use and an approximately vertically aligned resting position.

3. Arm rest according to claim 1, **characterised in that** it has a control means (54, 55, 56), which can be operated by the pivoting movement of the arm rest (18) so that when pivoting upwards the arm rest (18) is brought into a position, in which the upper part (23) and the lower part (22) lie as close to one another as possible.

4. Arm rest according to claim 3, **characterised in that** the control means (54, 55, 56) possess a memory function, by means of which when pivoting downwards the arm rest (18) is brought into the previously set relative position between the upper part (23) and the lower part (22).

5. Arm rest according to claim 1, **characterised in that** the upper part (23) is bowl-like.

6. Arm rest according to claim 1, **characterised in that** the upper part (23) engages over the lower part (22).

7. Arm rest according to claim 1, **characterised in that** the first articulation means (35, 36) additionally also has a translatory axis.

8. Arm rest according to claim 1, **characterised in that** the two articulation means (35, 36) have the same configuration.

9. Arm rest according to claim 1, **characterised in that** the first articulation means (35, 36) is a hinge joint, which is preferably located on the front end of the arm rest (18).

10. Arm rest according to claim 1, **characterised in that** at least the second articulation means (35, 36) has at least one gear wheel (38), the rotational axis of which is aligned horizontally in relation to the position of use and the rotational axis of which lies transversely to the longitudinal axis of the arm rest (18).

11. Arm rest according to claim 10, **characterised in that** two gear wheels (38) are provided, which are spaced from one another with respect to a vertical plane and which are rigidly coupled to one another by means of a shaft (39).

12. Arm rest according to claim 10, **characterised in that** at least the second articulation means (35, 36) includes at least one toothed rack (37), which meshes with the gear wheel (38).

13. Arm rest according to claim 12, **characterised in that** a spring means (41) is provided, which biases the respective toothed rack (37) into the engagement position with the respective gear wheel (38).

14. Arm rest according to claim 10, **characterised in that** the gear wheel (38) has an associated rotary locking means (43) to be operated randomly.

15. Arm rest according to claim 14, **characterised in that** the rotary locking means (43) has a bearing support (44), on which a pawl (45) biased into the engagement position with the gear wheel (38) is disposed to pivot.

16. Arm rest according to claim 15, **characterised in that** the bearing support (44) is rotatably disposed coaxially to the gear wheel (38).

17. Arm rest according to claim 15, **characterised in that** the bearing support (44) has an associated fixed stop (53).

18. Arm rest according to claim 15, **characterised in that** the bearing support (44) has an associated blocking means (54, 69), which firmly holds the bearing support (44) against the stop (53).

19. Arm rest according to claim 10, **characterised in that** the gear wheel (38) has an associated operating means (54, 55, 56), which converts the pivoting movement of the arm rest (18) around its bearing axis (29) into a rotational movement of the gear wheel (38).

20. Arm rest according to claim 19, **characterised in that** the operating stroke of the operating means (54, 55, 56) is dependent on the adjustment of the distance between the upper part (23) and the lower part (22).

21. Arm rest according to claim 19, **characterised in that** the operating means (54, 55, 56) includes a toothed rack (54), which cooperates with a gear wheel (55) sitting on the bearing axis (29) of the arm rest (18).

22. Arm rest according to claim 19, **characterised in that** the gear wheel (55) sitting on the bearing axis (29) of the arm rest (18) is fixed against rotation.

23. Arm rest according to claim 19, **characterised in that** the operating means (54, 55, 56) includes a control gear wheel (56), which is arranged coaxially to the gear wheel (38) of the articulation arrangement (35, 36) and is coupled to this by means of a connecting link arrangement (64, 65).

24. Arm rest according to claim 23, **characterised in that** the connecting link arrangement (64, 65) comprises a journal (64) on one of the two gear wheels (38, 56) and an opening (65) in the respective other gear wheel (38, 56).

25. Arm rest according to claim 1, **characterised in that** a biasing means (75) is provided, which biases the upper part (23) away from the lower part (22).

26. Arm rest according to claim 10, **characterised in that** a manually operable actuation button (30) is provided, which cooperates with the pawl (45) of one of the two articulation means (35, 36).

27. Arm rest according to claim 1, **characterised in that** the lower part (22) bears a back rest cushioned surface (28) on its outer surface.

## Revendications

1. Accoudoir pour des sièges de véhicules automobiles (11), notamment accoudoir central (18), en particulier pour des banquettes arrière de véhicules automobiles, qui comprend :
- une partie inférieure (22),
- une partie supérieure (23), qui porte une face d'appui de l'accoudoir (27),
- un premier dispositif d'articulation (35, 36), qui présente au moins un axe de rotation pour relier la partie supérieure (23) à la partie inférieure (22), cet axe de rotation étant perpendiculaire à l'axe longitudinal de l'accoudoir (18),
- un second dispositif d'articulation (35, 36), qui présente au moins un axe de rotation et un axe de translation pour relier la partie supérieure (23) à la partie inférieure (22) en un endroit éloigné du premier dispositif d'articulation (35, 36), l'axe de rotation étant perpendiculaire à l'axe longitudinal de l'accoudoir (18) tandis que l'arbre de translation est au moins à peu près vertical quand l'accoudoir (18) est en position d'utilisation,
- un dispositif d'arrêt (43) pour maintenir au moins le second dispositif d'articulation (35, 36) dans la position réglée.

2. Accoudoir selon la revendication 1, **caractérisé en ce que** la partie inférieure (22) est reliée au véhicule par un axe horizontal de palier (29), qui est perpendiculaire à l'axe longitudinal de la partie inférieure (22) de manière que l'accoudoir peut basculer en va et vient entre une position d'utilisation dirigée à peu près horizontalement et une position de repos dirigée à peu près verticalement.

3. Accoudoir selon la revendication 1, **caractérisé en ce qu'**il présente un dispositif de commande (54, 55, 56) qui peut être actionné par le basculement de l'accoudoir (18) de manière qu'en relevant l'accoudoir, celui-ci est amené dans une position où la partie supérieure (23) et la partie inférieure (22) sont l'une contre l'autre le plus étroitement possible.

4. Accoudoir selon la revendication 3, **caractérisé en ce que** le dispositif de commande (54, 55, 56) dispose d'une fonction mémoire par laquelle l'accoudoir (18), quand il s'abaisse, est amené, par rapport à la partie supérieure (23) et à la partie inférieure (22), dans la position préalablement réglée.

5. Accoudoir selon la revendication 1, **caractérisé en ce que** la partie supérieure (23) a le genre d'une coquille.

6. Accoudoir selon la revendication 1, **caractérisé en ce que** la partie supérieure (23) est en prise par dessus avec la partie inférieure (22).

7. Accoudoir selon la revendication 1, **caractérisé en ce que** le premier dispositif d'articulation (35, 36) présente de plus un axe de translation.

8. Accoudoir selon la revendication 1, **caractérisé en ce que** les deux dispositifs d'articulation (35, 36) sont construits de la même manière.

9. Accoudoir selon la revendication 1, **caractérisé en ce que** le dispositif d'articulation (35, 36) est une articulation à charnière, qui se trouve de préférence à l'extrémité avant de l'accoudoir (18).

10. Accoudoir selon la revendication 1, **caractérisé en ce qu'**au moins le second dispositif d'articulation (35, 36) présente au moins un pignon (38) dont l'axe de rotation en position d'utilisation est dirigé horizontalement et perpendiculairement à l'axe longitudinal de l'accoudoir.

11. Accoudoir selon la revendication 10, **caractérisé en ce qu'**il comprend deux pignons (38) qui, par rapport à un plan vertical, sont espacés l'un de l'autre et sont accouplés rigidement l'un à l'autre par un arbre (39).

12. Accoudoir selon la revendication 10, **caractérisé en ce qu'**au second dispositif d'articulation (35, 36) appartient au moins une crémaillère (37) qui est en prise avec le pignon (38).

13. Accoudoir selon la revendication 12, **caractérisé en ce qu'**il comprend un dispositif à ressort (41) qui précontraint la crémaillère (37) dans le sens de sa prise avec le pignon (38).

14. Accoudoir selon la revendication 10, **caractérisé en ce qu'**au pignon (38) est associé un dispositif d'arrêt de rotation (43) à actionner volontairement.

15. Accoudoir selon la revendication 14, **caractérisé en ce que** le dispositif d'arrêt de rotation (49) présente un support de palier (44) sur lequel est monté basculant un cliquet d'arrêt (45) qui est précontraint dans le sens de sa prise avec le pignon (38).

16. Accoudoir selon la revendication 15, **caractérisé en ce que** le support de palier (44) est monté en rotation, coaxialement au pignon (38).

17. Accoudoir selon la revendication 15, **caractérisé en ce qu'**au support de palier (44) est associée une butée fixe (53).

18. Accoudoir selon la revendication 15, **caractérisé en ce qu'**au support de palier (44) est associé un dispositif de blocage (54, 69), qui maintient ce support appliqué contre la butée (53).

19. Accoudoir selon la revendication 10, **caractérisé en ce qu'**au pignon (38) est associé un dispositif d'actionnement (54, 55, 56) qui convertit le mouvement de basculement de l'accoudoir (18) autour de son axe de palier (29) en un mouvement de rotation du pignon (38).

20. Accoudoir selon la revendication 19, **caractérisé en ce que** la course active du dispositif d'actionnement (54, 55, 56) dépend du réglage de la distance entre la partie supérieure (23) et la partie inférieure (22).

21. Accoudoir selon la revendication 19, **caractérisé en ce qu'**au dispositif d'actionnement (54, 55, 56) appartient une crémaillère (54) qui coopère avec un pignon (55) monté sur l'axe de palier (28) de l'accoudoir (18).

22. Accoudoir selon la revendication 19, **caractérisé en ce que** le pignon (55) monté sur l'axe de palier (29) de l'accoudoir (18) est solidaire en rotation.

23. Accoudoir selon la revendication 19, **caractérisé en ce qu'**au dispositif d'actionnement (54, 55, 56) appartient un pignon de commande (56) qui est coaxial au pignon (38) du dispositif d'articulation (35, 36) et lui est accouplé par un dispositif à coulisse (64, 65).

24. Accoudoir selon la revendication 23, **caractérisé en ce que** le dispositif à coulisse (64, 65) comprend sur un des deux pignons (38, 56) un pivot (64) et une ouverture dans l'autre pignon (38, 56).

25. Accoudoir selon la revendication 1, **caractérisé en ce qu'**il est prévu un dispositif de précontrainte (75) qui tend à écarter la partie supérieure (23) de la partie inférieure (22).

26. Accoudoir selon la revendication 10, **caractérisé en ce qu'**il est prévu un bouton de libération (30) actionnable manuellement, qui coopère avec le cliquet d'arrêt (45) d'un des deux dispositifs d'articulation (35, 36).

27. Accoudoir selon la revendication 1, **caractérisé en ce que** la partie inférieure (22) porte sur sa face externe une surface de coussin arrière (28).
